# EUROPÄISCHE PATENTANMELDUNG

(11) **EP 2 604 507 A2**
(43) Veröffentlichungstag der Anmeldung: **19.06.2013**
(21) Anmeldenummer: 12007038.8
(22) Anmeldetag: 11.10.2012
(51) Int. Cl.: B63H 25/04

(54) **Verfahren und Vorrichtung zum Steuern eines Wasserfahrzeugs sowie Fahrstand eines Wasserfahrzeugs**

(30) Priorität: 16.12.2011 DE 102011121201
(71) Anmelder: Robert Bosch GmbH, 70469 Stuttgart (DE)
(72) Erfinder: Volkmer, Norbert, 30900 Wedemark (DE)
(74) Vertreter: Thürer, Andreas

(57) **Zusammenfassung**

Die Erfindung betrifft ein Verfahren zum Steuern eines Wasserfahrzeugs (1) mit Antriebs- und/oder Navigationsaggregaten (3), bei welchem die Antriebs- und/oder Navigationsaggregate (3) in Abhängigkeit von Winkelpositionen eines Joystickbedienelementes (28, 29) in herstellerseitig vorgegebene Betriebskonstellationen funktionell eingestellt werden, um das Wasserfahrzeug (1) in eine gewünschten Richtung (20) zu beschleunigen, so dass das Wasserfahrzeug (1) selbst bei beengten Platzverhältnissen einfach gesteuert werden kann, und bei welchem die Antriebs- und/oder Navigationsaggregate (3) innerhalb zumindest einer der herstellerseitig vorgegebenen Betriebskonstellationen mittels des Joystickbedienelementes (28, 29) unabhängig voneinander individuell eingestellt werden, um das Wasserfahrzeug (1) trotz aller auf das Wasserfahrzeug (1) einwirkenden äußeren Kräfte (76) weiterhin in die gewünschte Richtung (20), aber auch in eine hiervon abweichende weitere Richtung, steuern zu können.

## Beschreibung

Die Erfindung betrifft einerseits ein Verfahren zum Steuern eines Wasserfahrzeugs mit Antriebs- und/oder Navigationsaggregaten, bei welchem die Antriebs- und/oder Navigationsaggregate in Abhängigkeit von Winkelpositionen eines Joystickbedienelementes in herstellerseitig vorgegebene Betriebskonstellationen funktionell eingestellt werden, um das Wasserfahrzeug in eine gewünschten Richtung zu beschleunigen, so dass das Wasserfahrzeug selbst bei beengten Platzverhältnissen einfach gesteuert werden kann.

Die Erfindung betrifft andererseits eine Vorrichtung zum Steuern eines Wasserfahrzeugs mit einer Bedieneinheit zum funktionellen Einstellen von Antriebs- und/oder Navigationsaggregaten, mittels welchen das Wasserfahrzeug in einer gewünschten Richtung beschleunigbar ist, bei welcher die Bedieneinheit ein Joystickbedienelement umfasst, mittels welchem herstellerseitig vorgegebene Betriebskonstellationen der Antriebs- und/oder Navigationsaggregate abhängig von Winkelpositionen des Joystickbedienelements abrufbar sind, damit das Wasserfahrzeug in die gewünschte Richtung beschleunigbar und selbst bei beengten Platzverhältnissen einfach steuerbar ist.

Darüber hinaus betrifft die Erfindung einen Fahrstand eines Wasserfahrzeugs zum Steuern des Wasserfahrzeugs mit Antriebs- und/oder Navigationsaggregaten (3).

Aus dem Stand der Technik sind Steuervorrichtungen zum Steuern eines Wasserfahrzeugs mit konventionellen Bedienelementen bekannt, um insbesondere Antriebs- und/oder Navigationsaggregate zum Erzeugen von Kraftvektoren zu betätigen, mittels welchen letztendlich ein Bewegen bzw. ein Navigieren des Wasserfahrzeugs bewirkt wird. Diese konventionellen Bedienelemente sind in der Regel hinsichtlich ihrer Funktion, ihres Gehäuses bzw. Standortes voneinander getrennt an einem Fahrstand angeordnet, wobei die konventionellen Bedienelemente insbesondere umfassen können: Kommandogeber zum Verstellen einer Schiffsschraubendrehzahl und einer Getrieberichtung, Pitch, Tiller, Joystick und/oder Taster bzw. Schalter zum Verstellen von Trimmklappen. Diese konventionellen Bedienelemente bedingen jedoch den Nachteil, dass sie von einer einzelnen Person, wie beispielsweise dem Kapitän eines Schiffes, nicht oder nur unzureichend zeitgleich bedient werden können, um das Wasserfahrzeug beispielsweise beim Navigieren in einem Hafen oder beim Anlegen an einem Anlegeplatz einfach steuern zu können.

Neben solchen konventionellen Steuervorrichtungen mit ihren konventionellen Bedienelementen existieren andererseits auch Vektorsteuerungsvorrichtungen zum Steuern eines Wasserfahrzeugs mit einer intelligenten Steuerung, bei welcher die Funktionen vorzugsweise aller, zumindest aber der wesentlichen Antriebs- und/oder Navigationsaggregate zusammengefasst bzw. miteinander algorithmisch verknüpft sind. Mittels dieser intelligenten Steuerung können die erforderlichen Antriebs- und/oder Navigationsaggregate vorteilhaft mit nur einem Joystick anhand dessen Joystickposition bzw. Winkelposition betätigt werden, wobei jedoch insbesondere Richtungs- und Geschwindigkeitsvorgaben mittels der gewählten Joystickbetätigungsposition untrennbar miteinander verknüpft vorgeben sind. Dies hat eine komfortablere Bedienung der Steuervorrichtung zum Vorteil. Insofern kann ein Wasserfahrzeug selbst auf engstem Raum und von ungeübten Personen besonders einfach und sicher bewegt werden, wie dies beim Anlegen an einer Anlegestelle, aber auch beim Ablegen von der Anlegestelle oftmals der Fall ist. Nachteilig ist es jedoch, dass die einzelne Kraftvektoren, die von Antriebs- und/oder Navigationsaggregaten erzeugt werden, und aus welchen sich eine resultierende Kraftvektorenkomponente ergibt, um die Position des Wasserfahrzeugs zu beeinflussen, mittels des Joysticks individuell nicht weiter beeinflusst werden können, da eine Joysticksteuerung die Kraftvektoren in Abhängigkeit der Joystickposition bzw. Joystickwinkelstellung nach einem vorgegebenen Algorithmus verändert.

Eine derartige Vektorsteuerungsvorrichtung ist beispielsweise mit dem Joystick-Control-System "MerCruiser^{®} Axius" der Firma Mercury zum Andocken eines Bootes verwirklicht, mit welchem die Position des Bootes mittels eines einzelnen Joysticks verändert werden kann. Beispielsweise werden durch Drehen des Joysticks um seine Hochachse, also um die z-Achse im Sinne eines dreidimensionalen kartesischen Koordinatensystems, die Antriebs-und/oder Navigationsaggregate insgesamt derart angesteuert, dass sich das Boot insbesondere ohne Vorwärtsbewegung lediglich um die Bootshochachse dreht. Entsprechend bewegt sich das Boot beispielsweise seitwärts nach steuerbord, wenn der Joystick nach rechts gedrückt wird, also in Richtung der x-Achse, wodurch ein seitliches Anlegen des Bootes in einen in seiner Länge begrenzten Anlegeplatz wesentlich erleichtert wird. Entsprechend kann das Boot seitwärts nach backbord bewegt werden. Darüber hinaus kann in Abhängigkeit der Druckintensität, mit welcher der Joystick in die jeweilige Richtung gedrückt wird, die Beschleunigung bzw. Geschwindigkeit des Bootes in die jeweilige gewünschte Richtung beeinflusst werden. Das Boot bewegt sich somit im Wesentlichen in diejenige Richtung, in welche der Joystick gedrückt wird.

Eine derartige intelligente Steuerung funktioniert sehr gut, solange keine äußeren Kräfte oder vernachlässigbar geringe äußere Kräfte auf ein Wasserfahrzeug einwirken, wie beispielsweise Wind und/oder Wellen. Ist das Wasserfahrzeug beispielsweise parallel zu einer steuerbord befindlichen Anlegemauer ausgerichtet, wird der Joystick in Richtung x-Achse, 15.00 Uhr-Orientierung, gedrückt, damit das Wasserfahrzeug in ruhigem Wasser und ohne kritischen Wind nach steuerbord traversiert und sich hierbei ohne Vorwärts- oder Rückwärtsschub seitlich auf die Anlegemauer zu bewegt.

Es ist Aufgabe der Erfindung, die bisher bekannten Steuerungsmöglichkeiten von Wasserfahrzeugen mit Joysticksteuerung zu verbessern und damit die Steuerung insgesamt intuitiver sowie komfortabler zu gestalten.

Die Aufgabe der Erfindung wird von einem Verfahren zum Steuern eines Wasserfahrzeugs mit Antriebs- und/oder Navigationsaggregaten gelöst, bei welchem die Antriebs- und/oder Navigationsaggregate in Abhängigkeit von Winkelpositionen eines Joystickbedienelementes in herstellerseitig vorgegebene Betriebskonstellationen funktionell eingestellt werden, um das Wasserfahrzeug in eine gewünschten Richtung zu beschleunigen, so dass das Wasserfahrzeug selbst bei beengten Platzverhältnissen einfach gesteuert werden kann, und bei welchem die Antriebs- und/oder Navigationsaggregate innerhalb zumindest einer der herstellerseitig vorgegebenen Betriebskonstellationen mittels des Joystickbedienelementes unabhängig voneinander individuell eingestellt werden, um das Wasserfahrzeug trotzt aller auf das Wasserfahrzeug wirkenden äußeren Kräfte weiterhin in die gewünschte Richtung, aber auch in eine hiervon abweichende weitere Richtung, steuern zu können.

Insbesondere wird daher vorgeschlagen, dass zwar einerseits in Abhängigkeit von der Joystickstellung vorgegebene Betriebskonstellationen eingestellt werden, dann aber, insbesondere als Reaktion auf äußere Kräfte wie Strömungen und Windkräften, einzelne Antriebs- und/oder Navigationsaggregate zusätzlich individuell angesprochen bzw. aktiviert werden können, um diesen Kräften entgegenzuwirken. Die Aktivierung dieser einzelnen Antriebs- und/oder Navigationsaggregate kann dabei beispielsweise über zusätzliche Steuerelemente erfolgen.

Vorteilhafter Weise ist es hierbei möglich, dass Wasserfahrzeug lediglich mittels eines Joystickbedienelementes zu steuern, ohne dass ein Fahrzeugführer, wie bisher nötig, ein weiteres Nicht-Joystickbedienelement betätigen muss, um das Wasserfahrzeug auch bei zusätzlich von außen auf das Wasserfahrzeug einwirkenden Kräften sicher steuern zu können. Insofern ist erfindungsgemäß eine intuitive Steuerung des Wasserfahrzeugs möglich.

Mit dem Begriff "herstellerseitig vorgegebene Betriebskonstellationen" ist vorliegend beschrieben, dass die Antriebs- und/oder Navigationsaggregate hinsichtlich ihrer Betriebseinstellungen in Abhängigkeit von Winkelpositionen eines Joystickbedienelementes fest voreingestellt (d.h. insbesondere in Bezug zueinander) sind, so dass es bisher nicht möglich ist, die Antriebs- und/oder Navigationsaggregate in einer dieser fest voreingestellten Betriebskonstellation allein durch Bedienen des Joystickbedienelements individuell zu betätigen, um erforderlichenfalls auf äußere auf das Wasserfahrzeug einwirkende Störgrößen reagieren zu können, ohne hierbei von einem zuvor eingeschlagenen Kurs abzuweichen.

Mit dem vorgeschlagenen Verfahren ist dies jedoch möglich. Insofern kann eine Funktion eines Antriebs- und/oder Navigationsaggregates oder können mehrere Funktionen eines Antriebs- und/oder Navigationsaggregates oder der Antriebs- und/oder Navigationsaggregate innerhalb einer der fest voreingestellten Betriebseinstellungen nur durch Bedienung des Joystickbedienelementes verändert werden.

Der Begriff "Winkelpositionen" beschreibt im Sinne der Erfindung im Wesentlichen ausgehend von einer Neutralstellung eines Joystickbedienelementes eingestellte Neigungseinstellungen bzw. Neigungsrichtungen, in welche das Joystickbedienelement zum Steuern geneigt wird. Aber auch eine Drehung um die Längsachse des Joystickbedienelementes wird mit dem Begriff "Winkelposition" erfasst. Insofern ist hiermit jede Lageveränderung des Joystickbedienelementes aus seiner Neutralstellung heraus erfasst.

Der "Begriff" Antriebs- und/oder Navigationsaggregate" beschreibt im Sinne der Erfindung jegliche Einrichtungen, mittels welchen ein Wasserfahrzeug angetrieben und navigiert, sprich gesteuert, werden kann.

Der Begriff "Joystickbedienelement" beschreibt im Sinne der Erfindung einen im Wesentlich senkrecht von einer Konsole abstehenden Bedienhebel, der an seinem unteren Ende in der Konsole beweglich gelagert ist und entsprechend geneigt und idealerweise gedreht werden kann. Bezogen auf ein kartesisches Koordinatensystem fluchtet der Bedienhebel in seiner Neutralstellung mit der z-Achse und kann in Richtung der x-Achse und y-Achse und idealerweise in jeder dazwischen liegende Position geneigt werden. Zudem ist der Bedienhebel um die z-Achse drehbar und gegebenenfalls in Richtung der z-Achse verschieblich gelagert. Derartige Joystickbedienelemente sind aus dem Stand der Technik bereits bekannt.

Jedoch ist mit diesen Joystickbedienelementen bisher keine vollumfängliche alleinige Joystick-Steuerung des Wasserfahrzeugs möglich.

Insofern wird die Aufgabe der Erfindung auch von einer Vorrichtung zum Steuern eines Wasserfahrzeugs mit einer Bedieneinheit zum funktionellen Einstellen von Antriebs- und/oder Navigationsaggregaten gelöst, mittels welchen das Wasserfahrzeug in einer gewünschten Richtung beschleunigt werden kann, bei welcher die Bedieneinheit ein Joystickbedienelement umfasst, mittels welchem herstellerseitig vorgegebene Betriebskonstellationen der Antriebs- und/oder Navigationsaggregate abhängig von Winkelpositionen des Joystickbedienelements abrufbar sind, damit das Wasserfahrzeug in die gewünschten Richtung beschleunigbar und selbst bei beengten Platzverhältnissen einfach steuerbar ist, wobei die Vorrichtung eine joystickbedienabhängige Steuerungseinrichtung umfasst, um die Antriebs- und/oder Navigationsaggregate in Abhängigkeit aller äußeren auf das Wasserfahrzeug einwirkenden Kräfte innerhalb zumindest einer der herstellerseitig vorgegebenen Betriebskonstellationen mittels des Joystickbedienelementes unabhängig voneinander individuell einzustellen, so dass das Wasserfahrzeug trotz aller auf das Wasserfahrzeug einwirkenden äußeren Kräfte weiterhin in die gewünschte Richtung, aber auch in eine hiervon abweichende weitere Richtung, steuerbar ist.

Mittels der joystickbedienabhängigen Steuerungseinrichtung können die Antriebs- und Navigationsaggregate auch innerhalb ihrer joystickbedieneinstellungsabhängigen vorgegebenen Betriebskonstellationen nochmals funktionell eingestellt werden, so dass erfindungsgemäß außer Joystickbedienelementen vorzugsweise keine weiteren Bedieneinrichtungen erforderlich sind, um das Wasserfahrzeug vollumfänglich steuern zu können.

Die joystickbedienabhängige Steuerungseinrichtung kann im Sinne der Erfindung sowohl als Hardwareeinrichtungen oder computerunterstützter Softwareeinrichtungen erzielt werden.

Darüber hinaus wird nach einem zusätzlichen Aspekt die Aufgabe der Erfindung auch von einem Verfahren zum Steuern eines Wasserfahrzeugs mit Antriebs- und/oder Navigationsaggregaten gelöst, bei welchem mit den Antriebs- und/oder Navigationsaggregaten Kraftvektoren erzeugt werden, welche in ihrer Gesamtheit als Kraftvektorenresultierende auf das Wasserfahrzeug wirken, so dass das Wasserfahrzeug in Abhängigkeit dieser Kraftvektorenresultierenden auf dem Wasser zielgerichtet gesteuert werden kann, bei welchem die Antriebs- und/oder Navigationsaggregate abhängig von Winkelpositionen eines Joystickbedienelementes funktionell in herstellerseitig vorgegebene Betriebskonstellationen voreingestellt werden, so dass das Wasserfahrzeug in Abhängigkeit der voreingestellten Kraftvektorenresultierenden in eine gewünschte Richtung beschleunigt wird, und bei welchem die voreingestellte Kraftvektorenresultierende in Abhängigkeit von auf das Wasserfahrzeug einwirkenden äußeren Kräften durch ein Korrekturbetätigen des Joystickbedienelementes zumindest in ihrer Wirkrichtung verändert wird, um das Wasserfahrzeug auch weiterhin in die gewünschte Richtung steuern zu können.

Bisher war es nicht möglich, die voreingestellte Kraftvektorenresultierende im Rahmen einer vorgegebenen Betriebskonstellation der Antriebs- und/oder Navigationsaggregate mittels einer weiteren Joystickbedienelementebetätigung zumindest in ihrer Wirkrichtung zu beeinflussen.

Kraftvektoren können beispielsweise durch Fest- oder Verstellpropeller und/oder Waterjets, also einen Pumpenwasserstrahl, erzeugt werden, Sie können darüber hinaus durch Klappenelementen voraus, neutral oder zurück gerichtet umgelenkt werden. Die Richtung der Kraftvektoren kann auch durch Schwenken eines Jets und/oder eines Hauptruders - etwa bei Fahrt durchs Wasser oder durch Anströmen durch Propeller bei einem stehenden Schiff - und/oder durch Heck- und/oder Bugstrahlruder erzeugt werden. Auch durch Azimutpropeller, einer oder mehrerer Düsen an einer Gondel bzw. einer drehbaren Gondel können Kraftvektoren erzeugt werden.

Vorzugsweise umfasst das Joystickbedienelement zusätzliche Schalter und/oder Taster, so dass mittels des Joystickbedienelements vorteilhafter Weise eine echte Einhand-Bedienungseinheit zum Steuern eines Wasserfahrzeugs bereit gestellt werden kann.

Insofern sieht eine vorteilhafte Verfahrensvariante auch vor, dass die Antriebs- und/oder Navigationsaggregate innerhalb zumindest einer der herstellerseitig vorgegebenen Betriebskonstellationen mittels Schaltelementen des Joystickbedienelementes unabhängig voneinander individuell eingestellt werden können.

Insbesondere wenn ein Wasserfahrzeug eine Vielzahl an miteinander kommunizierenden Antriebs- und/oder Navigationsaggregate aufweist, ist es vorteilhaft, wenn die Bedieneinheit mehr als ein Joystickbedienelement umfasst, so dass vorteilhafter Weise eine sehr einfache Zweihand-Bedienungseinheit nur auf Basis von Joystickelementen realisierbar ist.

Somit ist es besonders vorteilhaft, wenn die Antriebs- und/oder Navigationsaggregate innerhalb zumindest einer der herstellerseitig vorgegebenen Betriebskonstellationen mittels eines weiteren Joystickelements oder Schaltelements hiervon unabhängig voneinander individuell eingestellt werden können.

Hinsichtlich eines weiteren Aspekts der Erfindung wird die Aufgabe auch von einer Vorrichtung zum Steuern eines Wasserfahrzeugs mit einer Bedieneinheit zum funktionellen Einstellen von Antriebs- und/oder Navigationsaggregaten zum Erzeugen einer Vielzahl an auf das Wasserfahrzeug wirkenden Kraftvektoren, welche in ihrer Gesamtheit eine Kraftvektorenresultierende bewirken, um das Wasserfahrzeug zielgerichtet zu steuern, gelöst, wobei die Bedieneinheit auch ein Joystickbedienelement umfasst, mittels welchem die Antriebs- und Navigationsaggregate abhängig von Winkelpositionen des Joystickbedienelementes funktionell in herstellerseitig vorgegebene Betriebskonstellationen voreinstellbar sind, um das Wasserfahrzeug in Abhängigkeit der voreingestellten Kraftvektorenresultierenden in eine gewünschte Richtung zu beschleunigen, wobei die voreingestellte Kraftvektorenresultierende in Abhängigkeit von auf das Wasserfahrzeug einwirkenden Kräften durch Korrekturbetätigen des Joystickelementes zumindest in ihrer Wirkrichtung veränderbar ist, um das Wasserfahrzeug auch weiterhin in die gewünschte Richtung steuern zu können.

Außergewöhnlich vorteilhaft ist es, wenn die joystickbedienabhängige Steuerungseinrichtung eine SPS-Steuerungseinheit umfasst, um die Joystickbedienelemente sowie Schaltelemente hiervon hinsichtlich ihrer Funktionseinstellungen nahezu beliebig programmieren zu können. Insofern kann der Bedienkomfort weiter erhöht werden.

Vorteilhaft ist es, wenn die Bedieneinheit eine Einhandbedieneinrichtung mit einem hinsichtlich zwei oder drei Raumachsen verstellbaren Joystickbedienelement umfasst, um die Antriebs- und Navigationsaggregate einfach einstellen zu können.

Eine vorteilhafte Erhöhung der Einstellmöglichkeiten an den Antriebs- und Navigationsaggregaten kann erzielt werden, wenn die Bedieneinheit alternativ eine Zweihandbedieneinrichtung mit zwei hinsichtlich zwei oder drei Raumachsen verstellbaren Joystickbedienelementen umfasst.

Auch wird die Aufgabe der Erfindung von einem Fahrstand eines Wasserfahrzeugs zum Steuern des Wasserfahrzeugs mit Antriebs- und/oder Navigationsaggregaten gelöst, welcher sich durch eine Vorrichtung zum Steuern zumindest nach einem der hier beschriebenen vorteilhaften Merkmale auszeichnet, da hierdurch das Wasserfahrzeug intuitiv von einem Fahrzeugführer gesteuert werden kann.

Beispielsweise lässt eine intelligente Steuerung des Wasserfahrzeugs hinsichtlich einer Festpropeller-Antriebsanlage mit einem Steuerbord-Propeller-Antrieb und mit einem Backbord-Propeller-Antrieb einen Steuerbord-Propeller links herum und einen Backbord-Propeller entgegengesetzt rechts herum drehen, sodass hierdurch Kraftvektoren sowohl in Bug als auch in Heckrichtung erzeugt werden. Da der Steuerbord-Propeller rechts und der Backbord-Propeller links von der Wasserfahrzeugmittellinie angeordnet sind, dreht sich das Wasserfahrzeug um eine Vertikaldrehachse. Etwa mit Unterstützung von Bug- und/oder Heckstrahlruder und/oder eines Hauptruders, welche von den durch die Propeller erzeugten Kraftvektoren bzw. Wasserstrahlen angeströmt werden, wird eine hieraus Kraftvektorenresultierende gebildet, welche ein Traversieren des Wasserfahrzeugs in Richtung der x-Achse bewirkt. Kommen jedoch nun von außen Störeinflüsse hinzu, wie etwa eine Wasserströmung und/oder ein ungünstiger Wind aus ungünstigen Richtungen, kommt eine bisher übliche Vektorsteuerungsvorrichtung auf Basis einer Joystickbedienung an ihre Grenzen. Beispielsweise durch backbordseitigen Wind von schräg vorne würde das Wasserfahrzeug nach hinten steuerbord wegdriften.

Ein Fahrzeugführer kann erfindungsgemäß nun durch den Wind auf das Wasserfahrzeug ausgeübten Kräften durch ein Korrekturbedienen des Joystickbedienelementes entgegenwirken, indem er einzelne Kraftvektoren unabhängig voneinander beeinflusst. Dies gelingt erfindungsgemäß dadurch, dass einzelne Antriebs- und/oder Navigationsaggregate innerhalb einer vorgegebenen Betriebskonstellation mittels des Joystickbedienelementes oder eines weiteren Joystickbedienelementes isoliert hiervon eingestellt werden können.

Würde der Fahrzeugführer dies jedoch bei einer herkömmlichen Joysticksteuerung nur durch Bedienen des Joystickelementes versuchen, indem er das Joystickelement in dem vorstehend geschilderten Fall etwa in 11.00 Uhr-Richtung neigt, also entgegen dem backbordseitigen Wind von schräg vorne, wäre das eigentliche Traversiermanöver gestört.

Um derartige Störgrößen mit im Stand der Technik bekannten Lösungen aussteuern zu können, um insbesondere den Fahrzeugführer zu entlasten, existieren bereits Dynamic-Position-Systeme, welche mit Hilfe von GPS-Daten und Referenzpunkten, beispielsweise an Ölplattformen, das Wasserfahrzeug automatisiert navigieren. Diese Systeme sind jedoch sehr teuer und deshalb nur bedingt einsetzbar.

Es versteht sich, dass die Joystickbedienelemente hinsichtlich ihrer Funktionen unterschiedlich belegt sein können. Die Steuerung mittels der Joystickbedienelemente kann hierbei auf analogen und/oder digitalen Signalen, beispielsweise Tip-Tronic-Signalen erzielt werden.

Eine mögliche Funktionsbelegung kann wie folgt formuliert sein. Beispielsweise kann mittels einer Neigung des Joystickbedienelementes in x-Achsenrichtung nach backbord ein Bugstrahlruder eingestellt werden. Eine Neigung des Joystickbedienelementes in x-Achsenrichtung nach steuerbord bewirkt ein Einstellen eines Heckstrahlruders. Eine Neigung des Joystickbedienelementes in y-Achsenrichtung nach backbord verstellt die Richtung und Drehzahl eines Wendegetriebes eines backbordseitigen Hauptantriebes. Entsprechend verstellt eine Neigung des Joystickbedienelementes in y-Achsenrichtung nach steuerbord die Richtung und Drehzahl eines Wendegetriebes eines steuerbordseitigen Hauptantriebes. Eine Bedienung des Joystickbedienelementes um die z-Achse nach steuerbord oder backbord herum bewirkt beispielsweise ein Einstellen einer Ruderlage eines Hauptruders. Darüber hinaus könnte vorteilhafter Weise mit einem Taster eines backbordseitigen Joystickbedienelementes eine backbordseitige Trimmklappe eingestellt werden. Entsprechend könnte mit einem Taster eines steuerbordseitigen Joystickbedienelementes eine steuerbordseitige Trimmklappe eingestellt werden.

Insofern ist mittels des erfindungsgemäßen Verfahrens und der erfindungsgemäßen Vorrichtung auch eine Visualisierung der Antriebs- und Navigationsaggregate erzielt, da intuitiv leicht zu erfassen ist, welche Joystickbedienelementebetätigungen welche Wasserfahrzeugbewegungen zur Folge haben.

Bei einer weiteren Ausführungsform ist eine Anzeigeeinrichtung vorhanden, welche besonders bevorzugt die einzelnen Antriebs- und/oder Navigationsaggregate anzeigt. Bevorzugt zeigt die Anzeigeeinrichtung auch Auswirkungen auf einzelne, mehrere und bevorzugt alle Antriebs und/oder Navigationsgeräte durch eine oder mehrere bestimmte Joystick-Stellungen an. So können beispielsweise die Drehzahlen oder Winkelstellungen der einzelnen Antriebs- und/oder Navigationsaggregate angezeigt werden. Denkbar wären hier sowohl absolute Anzeigen wie auch Relativdarstellungen (z.B. 40% der maximalen Drehzahl).

Weitere Vorteile, Ziele und Eigenschaften vorliegender Erfindung werden anhand anliegender Zeichnung und nachfolgender Beschreibung erläutert, in welchen das erfindungsgemäße Verfahren beispielhaft mittels einer Vorrichtung zum Steuern eines Wasserfahrzeugs mit einer Bedieneinheit umfassend eine Zweihandbedieneinrichtung mit zwei Joystickbedienelementen dargestellt und beschrieben ist. In der Zeichnung zeigen:
- Figur 1: schematisch eine Aufsicht eines Schiffes an einer Anlegestelle; und
- Figur 2: schematisch eine Vorrichtung zum Steuern des Schiffes aus der Figur 1.

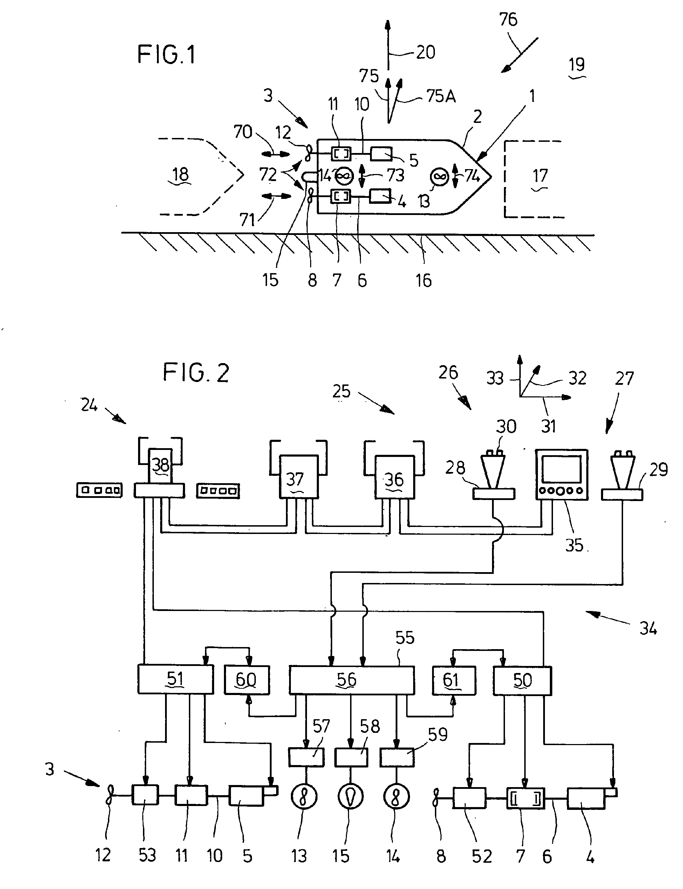

Bei dem in der Figur 1 gezeigten Wasserfahrzeug 1 handelt es sich um ein Schiff 2 mit Antriebs- und Navigationsaggregaten 3 umfassend einen Steuerbord-Motor 4 und einen Backbord-Motor 5. Der Steuerbord-Motor 4 treibt mittels einer Steuerbord-Antriebswelle 6 über ein Steuerbord-Wendegetriebe 7 einen Steuerbord-Festpropeller 8 an. Dementsprechend treibt der Backbord-Motor 5 mittels einer Backbord-Antriebswelle 10 über ein Backbord-Wendegetriebe 11 einen Backbord-Festpropeller 12 an.

Das Antriebs- und Navigationsaggregat 3 umfasst weiter ein Bugstrahlruder 13 und ein Heckstrahlruder 14 und es verfügt zudem über eine Rudereinrichtung 15.

Das Schiff 2 liegt an einer Anlegestelle 16 zwischen zwei weiteren Schiffen 17 und 18 im Wasser 19 und soll in Fahrtrichtung 20 traversierend von der Anlegestelle 16 ablegen.

Hierbei ist ein Fahrstand 24 (siehe Figur 2) des Schiffes 2 mit einer Vorrichtung 25 zum Steuern des Schiffes 2 umfassend eine Bedieneinheit 26 zum Steuern der Antriebs-und/oder Navigationsaggregate 3 ausgestattet, welche vorteilhafter Weise über eine Zweihandbedieneinrichtung 27 verfügt, die es erlaubt, das Schiff 2 lediglich mit zwei Joystickbedienelementen 28 und 29 zu steuern. Die Joystickbedienelemente 28 und 29 weisen oberseitig noch zusätzliche Schaltelemente 30 (hier nur exemplarisch beziffert) auf, um eine Zweihandbedienung weiter zu vereinfachen.

Die Joystickbedienelemente 28 und 29 können sowohl in Richtung der x-Achse 31, der y-Achse 32 als auch in jede Richtung dazwischen geneigt werden. Außerdem sind die Joystickbedienelemente 28 und 29 noch um die z-Achse 33 drehbar.

Die Vorrichtung 25 verfügt noch über ein elektrisches Leitungssystem 34, über welches insbesondere die beiden Joystickbedienelemente 28, 29 mit weiteren Komponenten der Vorrichtung 25 funktionell verbunden sind.

Neben diesen beiden Joystickbedienelementen ist die Vorrichtung 25 zum Steuern noch mit einem Überwachungsmonitor 35 ausgerüstet, welcher über das elektrische Leitungssystem 34 mit einer Steuerbord-Nock 36 vom Typ 240, einer Backbord-Nock 37 vom Typ 240 und einer Bridge 38 vom Typ 230 funktionell verbunden ist.

Die Bridge 38 ist hierbei sowohl mit einem Steuerbord-MPC-Modul 50 als auch mit einem Backbord MPC-Modul 51 funktionell verbunden.

Mittels des Steuerbord-MPC-Moduls 50 können der Steuerbord-Motor 4, die dazugehörige Steuerbord-Antriebswelle 6, das Steuerbord-Wendegetriebe 7 und letztendlich auch der Steuerbord-Festpropeller 8 sowie eine hinsichtlich des in der Figur 1 gezeigten Schiffes 2 nicht dargestellte Steuerbord-Trolling-Einrichtung 52 funktionell eingestellt werden.

Entsprechend können der Backbord-Motor 5, die dazugehörige Backbord-Antriebswelle 10, das Backbord-Wendegetriebe 11 und letztendlich auch der Backbord-Festpropeller 12 sowie eine hinsichtlich des in der Figur 1 gezeigten Schiffes 2 ebenfalls nicht dargestellte Backbord-Trolling-Einrichtung 53 mittels des Backbord-MPC-Moduls 51 funktionell eingestellt werden.

Erfindungsgemäß sind die Joystickbedienelemente 28 und 29 mittels des elektrischen Leitungssystems 34 mit einer joystickbedienabhängigen Steuerungseinrichtung 55 wirkverbunden, die eine SPS-Steuerung 56 beinhaltet, so dass die Joystickbedienelemente 28, 29 hinsichtlich ihrer Funktionen nahezu beliebig programmierbar sind.

Die joystickbedienabhängige Steuerungseinrichtung 55 steht in diesem Ausführungsbeispiel mittels weiterer Schaltelemente 57, 58 und 59 mit den Bug- und Heckstrahlrudern 13 bzw. 14 und der Rudereinrichtung 15 in Wirkkontakt.

Zudem ist die joystickbedienabhängige Steuerungseinrichtung 55 über jeweils ein WAGO^{®}-I/O-Modul 60 bzw. 61 an das Steuerbord-MPC-Modul 50 bzw. an das Backbord-MPC-Modul 51 angeschlossen, so dass mittels der Joystickbedienelemente 28 und 29 ein direkter Einstellzugriff auf die Antriebs- und/oder Navigationsaggregate 3 gewährleistet ist.

Insofern können mit den Antriebs- und/oder Navigationsaggregaten 3 Kraftvektoren 70, 71, 72, 73 und 74 erzeugt werden, welche in ihrer Gesamtheit als voreingestellte Kraftvektorenresultierende 75 auf das Wasserfahrzeug 1 wirken, so dass das Wasserfahrzeug 1 in Abhängigkeit dieser voreingestellten Kraftvektorenresultierenden 75 auf dem Wasser 19 zielgerichtet gesteuert werden kann, bei welchem die Antriebs- und/oder Navigationsaggregate 3 abhängig von Winkelpositionen der Joystickbedienelemente 28 und 29 funktionell in herstellerseitig vorgegebene Betriebskonstellationen eingestellt werden können, so dass das Wasserfahrzeug 1 in Abhängigkeit der voreingestellten Kraftvektorenresultierenden 75 in eine gewünschte Richtung 20 beschleunigt wird, und bei welchem die voreingestellte Kraftvektorenresultierende 75 in Abhängigkeit von auf das Wasserfahrzeug 1 einwirkenden äußeren Kräften 76 durch ein Korrekturbetätigen der Joystickbedienelemente 28, 29 zumindest in ihrer Wirkrichtung verändert wird, um das Wasserfahrzeug 1 mittels einer modifizierten Kraftvektorresultierenden 75A auch weiterhin in die gewünschte Richtung 20 steuern zu können.

Insofern ist das Schiff 2 intuitiv leichter steuerbar.

Es versteht sich, dass es sich bei dem vorstehend erläuterten Ausführungsbeispiel lediglich um eine erste Ausgestaltung des erfindungsgemäßen Verfahrens bzw. der erfindungsgemäßen Vorrichtung handelt. Insofern beschränkt sich die Ausgestaltung der Erfindung nicht auf dieses Ausführungsbeispiel.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Wasserfahrzeug
- 2: Schiff
- 3: Antriebs- und Navigationsaggregate
- 4: Steuerbord-Motor
- 5: Backbord-Motor
- 6: Steuerbord-Antriebswelle
- 7: Steuerbord-Wendegetriebe
- 8: Steuerbord-Festpropeller
- 10: Backbord-Antriebswelle
- 11: Backbord-Wendegetriebe
- 12: Backbord-Festpropeller
- 13: Bugstrahlruder
- 14: Heckstrahlruder
- 15: Rudereinrichtung
- 16: Anlegestelle
- 17: weiteres erstes Schiff
- 18: weiteres zweites Schiff
- 24: Fahrstand
- 25: Vorrichtung zum Steuern
- 26: Bedieneinheit
- 27: Zweihandbedieneinrichtung
- 28: erstes Joystickbedienelement
- 29: zweites Joystickbedienelement
- 30: zusätzliche Schaltelemente
- 31: x-Achse
- 32: y-Achse
- 33: z-Achse
- 34: elektrisches Leitungssystem
- 35: Überwachungsmonitor
- 36: Steuerbord-Nock
- 37: Backbord-Nock
- 38: Bridge
- 50: Steuerbord-MPC-Modul
- 51: Backbord-MPC-Modul
- 52: Steuerbord-Trolling-Einrichtung
- 53: Backbord-Trolling-Einrichtung
- 55: joystickbedienabhängige Steuerungseinrichtung
- 56: SPS-Steuerung
- 57: weiteres erstes Schaltelement
- 58: weiteres zweites Schaltelement
- 59: weiteres drittes Schaltelement
- 60: erstes WAGO^{®}-I/O-Modul
- 61: weiteres WAGO^{®}-I/O-Modul
- 70: Steuerbord-Propeller-Kraftvektor
- 71: Backbord-Propeller-Kraftvektor
- 72: Rudereinrichtungs-Kraftvektor
- 73: Heckstrahlruder-Kraftvektor
- 74: Bugstrahlruder-Kraftvektor
- 75: Kraftvektorenresultierende
- 75A: modifizierten Kraftvektorresultierende
- 76: äußere Kräfte

## Patentansprüche

1. Verfahren zum Steuern eines Wasserfahrzeugs (1) mit Antriebs- und/oder Navigationsaggregaten (3), bei welchem die Antriebs- und/oder Navigationsaggregate (3) in Abhängigkeit von Winkelpositionen eines Joystickbedienelementes (28, 29) in herstellerseitig vorgegebene Betriebskonstellationen funktionell eingestellt werden, um das Wasserfahrzeug (1) in eine gewünschten Richtung (20) zu beschleunigen, so dass das Wasserfahrzeug (1) selbst bei beengten Platzverhältnissen einfach gesteuert werden kann,
**dadurch gekennzeichnet,dass**
die Antriebs- und/oder Navigationsaggregate (3) innerhalb zumindest einer der herstellerseitig vorgegebenen Betriebskonstellationen mittels des Joystickbedienelementes (28, 29) unabhängig voneinander individuell eingestellt werden, um das Wasserfahrzeug (1) trotz aller auf das Wasserfahrzeug (1) einwirkenden äußeren Kräfte (76) weiterhin in die gewünschte Richtung (20), aber auch in eine hiervon abweichende weitere Richtung, steuern zu können.

2. Verfahren nach Anspruch 1,
**dadurch gekennzeichnet, dass**
mit den Antriebs- und/oder Navigationsaggregaten (3) Kraftvektoren (70, 71, 72, 73, 74) erzeugt werden, welche in ihrer Gesamtheit als Kraftvektorenresultierende (75) auf das Wasserfahrzeug (1) wirken, so dass das Wasserfahrzeug (1) in Abhängigkeit dieser Kraftvektorenresultierenden (75) auf dem Wasser (19) zielgerichtet gesteuert werden kann, bei welchem die Antriebs- und/oder Navigationsaggregate (3) abhängig von Winkelpositionen eines Joystickbedienelementes (28, 29) funktionell in herstellerseitig vorgegebene Betriebskonstellationen eingestellt werden können, so dass das Wasserfahrzeug (1) in Abhängigkeit der voreingestellten Kraftvektorenresultierenden (75) in eine gewünschte Richtung (20) beschleunigt wird, und bei welchem die voreingestellte Kraftvektorenresultierende (75) in Abhängigkeit von auf das Wasserfahrzeug (1) einwirkenden äußeren Kräften (76) durch ein Korrekturbetätigen des Joystickbedienelementes (28, 29) zumindest in ihrer Wirkrichtung verändert wird, um das Wasserfahrzeug (1) auch weiterhin in die gewünschte Richtung (20) steuern zu können.

3. Verfahren nach Anspruch 1 oder 2,
**dadurch gekennzeichnet,dass**
die Antriebs- und/oder Navigationsaggregate (3) innerhalb zumindest einer der herstellerseitig vorgegebenen Betriebskonstellationen mittels Schaltelementen (30) des Joystickbedienelementes (28, 29) unabhängig voneinander individuell eingestellt werden.

4. Verfahren nach einem der Ansprüche 1 bis 3,
**dadurch gekennzeichnet,dass**
die Antriebs- und/oder Navigationsaggregate (3) innerhalb zumindest einer der herstellerseitig vorgegebenen Betriebskonstellationen mittels eines weiteren Joystickelements (28, 29) oder Schaltelementen (30) hiervon unabhängig voneinander individuell eingestellt werden.

5. Vorrichtung (25) zum Steuern eines Wasserfahrzeugs (1) mit einer Bedieneinheit (26) zum funktionellen Einstellen von Antriebs- und/oder Navigationsaggregaten (3), mittels welchen das Wasserfahrzeug (1) in einer gewünschten Richtung (20) beschleunigbar ist, bei welcher die Bedieneinheit (26) ein Joystickbedienelement (28, 29) umfasst, mittels welchem herstellerseitig vorgegebene Betriebskonstellationen der Antriebs- und/oder Navigationsaggregate (3) abhängig von Winkelpositionen des Joystickbedienelements (28, 29) abrufbar sind, damit das Wasserfahrzeug (1) in die gewünschten Richtung (20) beschleunigbar und selbst bei beengten Platzverhältnissen einfach steuerbar ist,
**dadurch gekennzeichnet,dass**
die Vorrichtung (25) eine joystickbedienabhängige Steuerungseinrichtung (55) umfasst, um die Antriebs- und/oder Navigationsaggregate (3) in Abhängigkeit aller äußeren auf das Wasserfahrzeug (1) einwirkenden Kräfte innerhalb zumindest einer der herstellerseitig vorgegebenen Betriebskonstellationen mittels des Joystickbedienelementes (28, 29) unabhängig voneinander individuell einzustellen, so dass das Wasserfahrzeug (1) trotzt aller auf das Wasserfahrzeug (1) einwirkenden äußeren Kräfte (76) weiterhin in die gewünschte Richtung (20), aber auch in eine hiervon abweichende weitere Richtung, steuerbar ist.

6. Vorrichtung (25) nach Anspruch 5,
**gekennzeichnet durch**
Antriebs- und/oder Navigationsaggregate (3) zum Erzeugen einer Vielzahl an auf das Wasserfahrzeug (1) wirkenden Kraftvektoren (70, 71, 72, 73, 74), welche in ihrer Gesamtheit eine Kraftvektorenresultierende (75) bewirken, um das Wasserfahrzeug (1) zielgerichtet zu steuern, wobei die Bedieneinheit (26) auch ein Joystickbedienelement (28, 29) umfasst, mittels welchem die Antriebs- und Navigationsaggregate (3) abhängig von Winkelpositionen des Joystickbedienelementes (28, 29) funktionell in herstellerseitig vorgegebene Betriebskonstellationen voreinstellbar sind, um das Wasserfahrzeug (1) in Abhängigkeit der voreingestellten Kraftvektorenresultierenden (75) in eine gewünschte Richtung (20) zu beschleunigen, wobei die voreingestellte Kraftvektorenresultierende (75) in Abhängigkeit von auf das Wasserfahrzeug (1) einwirkenden Kräften (76) **durch** Korrekturbetätigen des Joystickelementes (28, 29) zumindest in ihrer Wirkrichtung veränderbar ist, um das Wasserfahrzeug (1) auch weiterhin in die gewünschte Richtung (20) steuern zu können.

7. Vorrichtung (25) nach Anspruch 5 oder 6,
**dadurch gekennzeichnet, dass**
die joystickbedienabhängige Steuerungseinrichtung (55) eine SPS-Steuerungseinheit (56) umfasst, um die Joystickbedienelemente (28, 29) sowie Schaltelemente (30) hiervon hinsichtlich ihrer Funktionseinstellungen nahezu beliebig programmieren zu können.

8. Vorrichtung (25) nach einem der Ansprüche 5 bis 7,
**dadurch gekennzeichnet, dass**
die Bedieneinheit (26) eine Einhandbedieneinrichtung mit einem hinsichtlich zwei oder drei Raumachsen (31, 32, 33) verstellbaren Joystickbedienelement (28, 29) umfasst.

9. Vorrichtung (25) nach einem der Ansprüche 5 bis 7,
**dadurch gekennzeichnet, dass**
die Bedieneinheit (26) eine Zweihandbedieneinrichtung (27) mit zwei hinsichtlich zwei oder drei Raumachsen (31, 32, 33) verstellbare Joystickbedienelemente (28, 29) umfasst.

10. Fahrstand (24) eines Wasserfahrzeugs (1) zum Steuern des Wasserfahrzeugs (1) mit Antriebs- und/oder Navigationsaggregaten (3),
**dadurch gekennzeichnet, dass**
der Fahrstand (24) eine Vorrichtung (25) nach einem der Ansprüche 5 bis 9 aufweist.
